# EUROPEAN PATENT APPLICATION

(11) **EP 2 562 866 A1**
(43) Date of publication of application: **27.02.2013**
(21) Application number: 11771892.4
(22) Date of filing: 11.04.2011
(51) Int. Cl.: H01M 10/39, H01M 10/48, H01M 10/50

(54) **MOLTEN SALT BATTERY DEVICE AND TEMPERATURE CONTROL METHOD FOR MOLTEN SALT BATTERY**

(30) Priority: 22.04.2010 JP 2010099041
(71) Applicant: Sumitomo Electric Industries, Ltd., Osaka-shi, Osaka 541-0041 (JP)
(72) Inventor: HIRAIWA, Chihiro, Osaka-shi Osaka 554-0024 (JP); MAJIMA, Masatoshi, Osaka-shi Osaka 554-0024 (JP); NITTA, Koji, Osaka-shi Osaka 554-0024 (JP); SAKAI, Shoichiro, Osaka-shi Osaka 554-0024 (JP); FUKUNAGA, Atsushi, Osaka-shi Osaka 554-0024 (JP); INAZAWA, Shinji, Osaka-shi Osaka 554-0024 (JP)
(74) Representative: Setna, Rohan P.
(86) International application number: PCT/JP2011/058966
(87) International publication number: WO 2011/132557

(57) **Abstract**

Provided are a molten salt battery device capable of controlling the temperature of its molten salt batteries evenly and being further cooled easily; and a method for controlling the temperature of a molten salt battery.

In the molten salt battery device, molten salt batteries 1 are arranged in a container 2 to cause a space to be present around the molten salt batteries 1, and a heating medium 3 is filled into the space around the molten salt batteries 1. While an electrothermal heater 51 is used to control the temperature of the heating medium 3 through a temperature controlling section 52, the heating medium 3 is caused to flow. Between the flowing heating medium 3 and the molten salt batteries 1, heat is exchanged, whereby the molten salt battery device controls the temperature of the molten salt batteries 1. Since the molten salt batteries 1 attain the heat exchange with the heating medium 3, which surrounds the batteries, the internal temperature thereof is evenly controlled. Moreover, the molten salt battery device makes it possible to lower the temperature of the heating medium 3 to cool the molten salt batteries 1 easily.

## Description

### TECHNICAL FIELD

The present invention relates to a molten salt battery device for causing molten salt battery/batteries to operate while the temperature of the molten salt battery/batteries is controlled, and a method for controlling the temperature of a molten salt battery.

### BACKGROUND ART

In recent years, the use of natural energies of sunlight, wind power, and others has been advanced. When electric power is generated by use of a natural energy, the electric power generation amount is easily varied because of a change in natural conditions, such as weather, and further the electric power generation amount is not easily adjusted in accordance with electric power demand. Accordingly, in order to supply the electric power generated by use of a natural energy, it is necessary to level the supply power by charging and discharging through the use of a storage battery. For this reason, in order to attain further promotion of the use of natural energies, storage batteries high in energy density and efficiency are indispensable. As such storage batteries, sodium-sulfur batteries, and others are used. Furthermore, attention has been paid to molten salt batteries wherein a molten salt is used as an electrolytic solution.

Molten salt batteries are each a battery wherein a molten salt is used as an electrolyte. At room temperature, the battery does not operate since a molten salt therein does not have electroconductivity. In the state that the molten salt is heated up to not lower than a temperature at which the molten salt is actually molten, the battery operates. The wording "room temperature" means a temperature in the state that the battery is neither heated nor cooled, and is any temperature from about 1 to 30°C, for example. Patent Literatures 1 and 2 each disclose a sodium-sulfur battery operable at about 300°C. Molten salt batteries are each made to contain one or more power generating elements, and the molten salt batteries are connected to each other in series or in parallel to form a molten salt battery device. Patent Literatures 1 and 2 each describe a molten salt battery wherein molten salt cells are held in an insulating container, and an electrothermal heater for heating is set inside each of the molten salt cells, thereby making it possible to heat the inside thereof to up to a temperature at which the cells operate.

### CITATION LIST

### PATENT LITERATURES

Patent Literature 1: Japanese Unexamined Patent Publication No. 8-78051
Patent Literature 2: Japanese Unexamined Patent Publication No. 2005-149977

### SUMMARY OF INVENTION

### (TECHNICAL PROBLEM)

In any molten salt battery inside which an electrothermal heater is set, its region near the electrothermal heater turns into a high temperature and its region far therefrom turns into a low temperature so that the inside of the molten salt battery becomes uneven in temperature. In general, a molten salt is made better in electroconductivity as the temperature thereof is higher. Thus, as the temperature is higher, for example, the power performance of a molten salt battery is made better. When a molten salt battery is used in the state that the internal temperature thereof is uneven, a lower value out of values of the internal temperature produces a large effect onto the performance of the molten salt battery to result in a problem that the efficiency of the molten salt battery deteriorates. Moreover, a high-temperature region of a battery module turns easily into an overcharge or overdischarge state. Thus, there remains a problem that the high temperature region deteriorates rapidly so that the lifespan of the whole of the molten salt battery becomes short.

About molten salt batteries wherein an electrothermal heater for heating is set inside an insulating container, the temperature of the inside cannot be easily lowered. Conventional molten salt batteries have a problem that the inside thereof is required to be urgently cooled, such as a case where the inside unnaturally generates heat, the temperature of the inside cannot be rapidly lowered so that a danger is generated.

In light of the situation, the invention has been made, and an object thereof is to provide a molten salt battery device making it possible to control the temperature of its molten salt battery/batteries evenly by heating the molten salt battery/batteries from the outside thereof, and cool the molten salt battery/batteries easily; and a method for controlling the temperature of a molten salt battery.

### (SOLUTION TO PROBLEM)

The molten salt battery device according to the invention includes molten salt battery/batteries in each of which a molten salt being molten at a temperature higher than room temperature is used as an electrolyte, the device comprising: a container in which the molten salt battery/batteries is/are arranged to cause a space to be present around a partial or entire periphery of the molten salt battery/batteries; a heating medium filled in the space in the container; means that causes the heating medium to flow; and means that controls a temperature of the heating medium.

The molten salt battery device according to the invention further includes: means that detects the temperature of the molten salt battery/batteries, means that discharges the heating medium from the container when the temperature detected by the means exceeds a predetermined temperature value, or when the temperature rises up to a value not lower than a predetermined range, and means that injects into the container a heating medium having a temperature lower than that of the discharged heating medium.

The molten salt battery device according to the invention includes, outside the container, an insulating container capable of storing, therein, the heating medium, and further includes means that circulates the heating medium between the container and the insulating container, and stops the circulation.

The molten salt battery device according to the invention is a device wherein the container is formed to have a shape for generating a turbulent flow in the heating medium around the periphery of the molten salt battery/batteries.

The molten salt battery device according to the invention is a device wherein a projection for generating the turbulent flow in the heating medium around the periphery of the molten salt battery/batteries is formed in the container.

The molten salt battery device according to the invention is a device wherein the heating medium is water, an aqueous solution, silicone oil, or perfluoropolyether.

The method according to the invention for controlling the temperature of a molten salt battery is a method wherein a molten salt that is actually molten at a temperature higher than room temperature is used as an electrolyte, wherein the molten salt battery is arranged in a container, and a heating medium is filled into a space around the molten salt battery inside the container; and further the temperature of the heating medium is controlled, and the heating medium is caused to flow to conduct heat exchange between the molten salt battery and the heating medium, thereby controlling the temperature of the inside of the molten salt battery.

The method according to the invention, for controlling the temperature of the molten salt battery, is a method wherein: outside the container is placed an insulating container capable of storing, therein, the heating medium, and circulating the heating medium between the insulating container and the container; the heating medium is caused to flow from the container into the insulating container, and the heating medium caused to flow in is stored in the insulating container; and in the state that the temperature of the heating medium in the container is lower than that of the heating medium inside the insulating container, the stored heating medium is caused to flow from the insulating container to the container, thereby raising the temperature of the heating medium inside the container.

According to the invention, in the molten salt battery device, its molten salt battery/batteries is/are arranged in a container to cause a space to be present around the battery/batteries, and a heating medium is filled in the space. The heating medium is caused to flow while the temperature of the heating medium is controlled. In this way, in the molten salt battery device, heat exchange is attained between the flowing heating medium and the molten salt battery/batteries to control the temperature of the molten salt battery/batteries.

According to the invention, when the temperature of the molten salt battery/batteries rises abnormally in the molten salt battery device, the heating medium is discharged from the container and a heating medium having a lower temperature is injected into the container so that the molten salt battery/batteries is/are rapidly cooled.

According to the invention, in the molten salt battery device, in the manner of forming a projection inside the container, or in any other manner, the internal shape of the container is made into a shape for generating a turbulent flow into the heating medium. Thus, by the generation of the turbulent flow, the heat exchange is efficiently attained.

According to the invention, in the molten salt battery device, use is made of water, an aqueous solution, silicone oil, or perfluoropolyether as the heating medium. Silicone oil and perfluoropolyether are good in affinity with any member made of a metal, and are high in stability against temperature.

According to the invention, in the molten salt battery device, an insulating container placed is outside the container. While the molten salt battery/batteries operate(s), the heating medium is caused to flow from the container into the insulating container so that the heating medium is stored in the insulating container, thereby keeping the temperature of the heating medium in the insulating container. At the time of starting the molten salt battery device from a state that the temperature of the inside of the container is low so that its molten salt battery/batteries does/do not operate, the heating medium the temperature of which is kept in the insulating container is caused to flow from the insulating container into the container, whereby the temperature of the inside of the container is raised in a short period.

### (ADVANTAGEOUS EFFECTS OF INVENTION)

In the invention, heat exchange is attained between the molten salt battery/batteries and the heating medium around the battery/batteries; therefore, the temperature of the molten salt battery/batteries is evenly controlled so that the following is not caused: one or more of the batteries, or one or more portions of the inside(s) of the molten salt battery/batteries are overheated. Thus, the safety of the molten salt battery/batteries is high, and further the lifespan of the molten salt battery/batteries and that of the molten salt battery device are extended. Furthermore, the invention gives an advantage that the molten salt battery/batteries can easily be cooled by lowering the temperature of the heating medium, and other great advantages.

### BRIEF DESCRIPTION OF DRAWINGS

FIG. 1 is schematic view illustrating the structure of a molten salt battery device according to embodiment 1.
FIG. 2 is a schematic perspective view of a container.
FIG. 3A is a schematic sectional view of the container.
FIG. 3B is a schematic sectional view of the container.
FIG. 4 is a schematic sectional view illustrating a structural example of a molten salt battery held in a battery space.
FIG. 5 is a schematic perspective view illustrating a structural example of a molten salt battery containing plural power generating elements.
FIG. 6A is a schematic view illustrating the structure of a battery container.
FIG. 6B is a schematic view illustrating the structure of the battery container.
FIG. 7A is a schematic view illustrating the structure of a battery lid body.
FIG. 7B is a schematic view illustrating the structure of the battery lid body.
FIG. 8 is a schematic sectional view of an inner wall of a container.
FIG. 9 is a schematic view illustrating the structure of a molten salt battery device according to embodiment 2.

### DESCRIPTION OF EMBODIMENTS

Hereinafter, embodiments of the invention will be specifically described with reference to the drawings.

### (Embodiment 1)

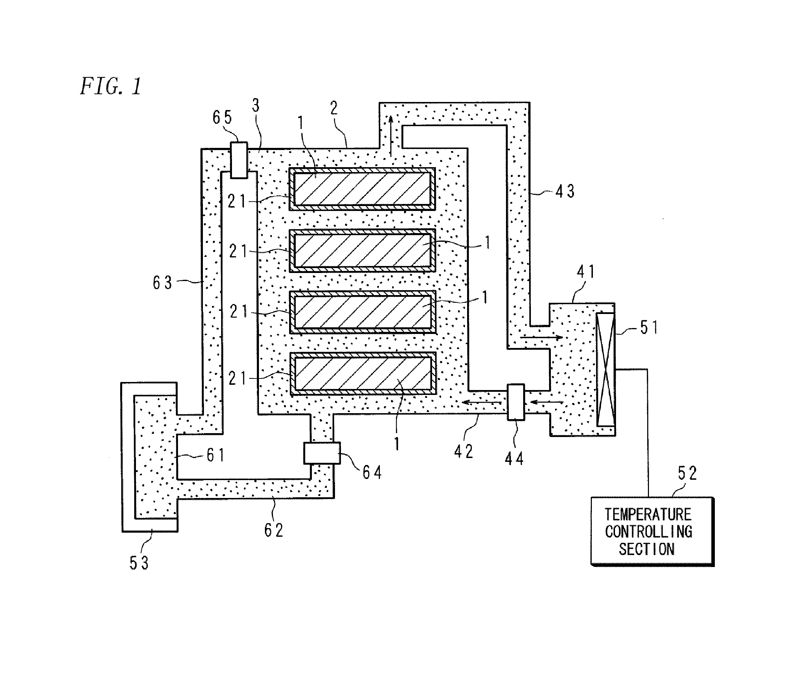

FIG. 1 is a schematic view illustrating the structure of a molten salt battery device according to embodiment 1. The molten salt battery device has a container 2 having a size permitting plural molten salt batteries 1 to be arranged inside the container 2. The container 2 is a boxy structural body having a cavity therein, and is formed to have a structure inside which the plural molten salt batteries 1 can be arranged to cause a space to be present around each of the molten salt batteries 1. A heating medium 3 is filled into the spaces around the molten salt batteries 1 inside the container 2. The heating medium 3 is a fluid for controlling the temperature of the molten salt batteries 1 by heat exchange between the heating medium 3 and the molten salt batteries 1. The heating medium 3 is, for example, water, an aqueous solution, silicone oil, or perfluoropolyether. In FIG. 1, an example wherein the molten salt batteries 1 are horizontally laid is shown; however, the molten salt battery device may be in such a form that the molten salt batteries 1 are vertically arranged.

To the container 2 are linked a pipe 42 through which the heating medium 3 which is to flow into the container 2 is passed, and a pipe 43 through which the heating medium 3 which flows out from the container 2 is passed. The pipes 42 and 43 are linked to a tank 41 in which the heating medium 3 remains. In the middle of the pipe 42, a pump 44 is set up. The pump 44 causes the heating medium 3 in the tank 41 to be injected through the pipe 42 into the container 2. Following this, the heating medium 3 in the container 2 is passed through the pipe 43, and discharged from the container 2 to be returned to the tank 41. In this way, the heating medium 3 is circulated so that the heating medium 3 flows through the spaces inside the container 2. A valve that can be closed as the need arises may be fitted to each of the pipes 42 and 43. The pump 44 may be set in some other position.

The molten salt battery device has, inside the tank 41, an electrothermal heater 51 for heating the heating medium 3. The electrothermal heater 51 is connected to a temperature controlling section 52 composed of a power source for supplying electric power to the electrothermal heater 51, and an operating unit for making an operation for adjusting the electric power to be supplied from the power source. According to the temperature controlling section 52, a temperature sensor not illustrated is used to measure the temperature of the heating medium 3, and then the electric power to be supplied to the electrothermal heater 51 is adjusted in accordance with the measured temperature, thereby controlling the temperature of the heating medium 3 heated through the electrothermal heater 51. The heating medium 3 heated through the electrothermal heater 51 flows through the container 1, and then heat exchange is attained between the heating medium 3 and the molten salt batteries 1, thereby heating the molten salt batteries 1.

To the container 2 are further connected a pipe 62 through which the heating medium 3 discharged from the container 2 is passed, and a pipe 63 through which the heating medium 3 which is to be injected into the container 2 is passed. The pipes 62 and 63 are linked to a tank 61 in which the heating medium 3 remains. In the middle of the pipe 62, a pump 64 is set up which does not operate in an ordinary state that the molten salt battery device operates. In the middle of the pipe 65, a valve 65 which is closed in the ordinary state is set. The valve 65 is an electromagnetic valve that can be closed and opened by remote control. When the pump 64 operates in the state that the valve 65 is opened, the pump 64 causes the heating medium 3 inside the container 2 to be discharged from the container 2. Following this, the heating medium 3 in the tank 61 is passed through the pipe 63 to be injected into the container 2. The tank 61 is provided with a cooling section 53 for cooling the heating medium 3 in the tank 61, such as a heat-radiating plate, a water jacket or a cooling device. The pipe 62 may be provided with a valve that is closed in the ordinary state. The pump 64 may be set at some other position.

The temperature controlling section 52 is capable of measuring the temperatures of the molten salt batteries 1 by use of temperature sensors that will be described later, and controlling respective operations of the pump 44, the pump 64 and the valve 65 in accordance with the measured temperature. When the temperature of the molten salt batteries 1 exceeds a predetermined temperature that is beforehand decided, such as the upper limit of the range of temperatures at which the molten salt batteries 1 operate safely, the temperature controlling section 52 makes controls for stopping the pump 44, opening the valve 65 and operating the pump 64. By the stop of the pump 44, the heated heating medium 3 is stopped from flowing into the container 2. By the opening of the valve 65 and the operation of the pump 64, the heated heating medium 3 is discharged from the container 2, and the heating medium 3 that is cooled to a lower temperature through the cooling section 53 is injected into the container 2. In this way, the temperature of the heating medium 3 in the container 3 is rapidly cooled, and the molten salt batteries 1 for exchanging heat with the heating medium 3 are cooled. The temperature controlling section 52 may conduct a processing for cooling the molten salt batteries 1 also when the temperature of the molten salt batteries 1 rises up to a temperature not lower than a predetermined range, for example, when a rise in the temperature of the molten salt batteries 1 per unit time exceeds a predetermined upper limit value that is beforehand decided. The molten salt battery device may be in such a form that the heating medium 3 that is to be discharged from the container 2 through the pipe 62 is discharged without being returned into the container 2, and another heating medium that is cooled is injected into the container 2 through the pipe 63. The molten salt battery device may be in such a form that the temperature of the molten salt batteries 1 is indirectly detected by measuring the temperature of a portion of a member other than the molten salt batteries 1, for example, the temperature of the heating medium 3 around the molten salt batteries 1, or the temperature of a portion of the container 2.

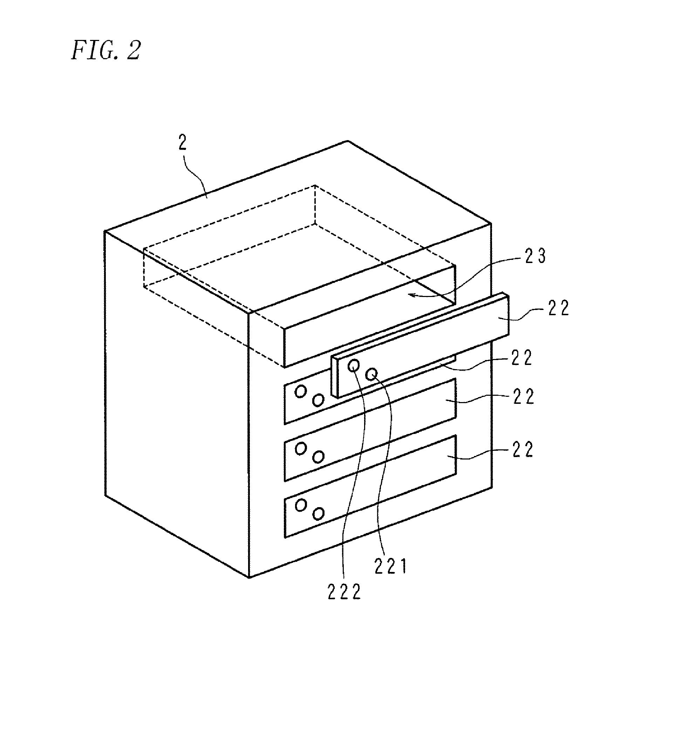

FIG. 2 is a schematic perspective view of the container 2. The container 2 is formed, as a whole, into the form of a rectangular parallelepiped. The front of the container 2 is provided with lid sections 22 the number of which is equal to the number of the molten salt batteries 1 that can be arranged therein. The lid sections 22 can be attached thereto and detached therefrom. In FIG. 2 is shown an example wherein one of the lid sections 22 is detached. The front of each of the lid sections 22 is provided with a positive electrode terminal 221 and a negative electrode terminal 222 for taking electric power from any one of the molten salt batteries 1. Inside the container 2 from which each of the lid sections 22 is detached, a space 23 for a battery is created which is a space in which any one of the molten salt batteries 1 is held. In FIG. 2, one of the battery spaces 23 is shown by broken lines. The battery spaces 23 are each in the form of a rectangular parallelepiped. The molten salt batteries 1 are held in the battery spaces 23 and then the lid sections 22 are fitted thereto, whereby the molten salt batteries 1 are arranged inside the container 2.

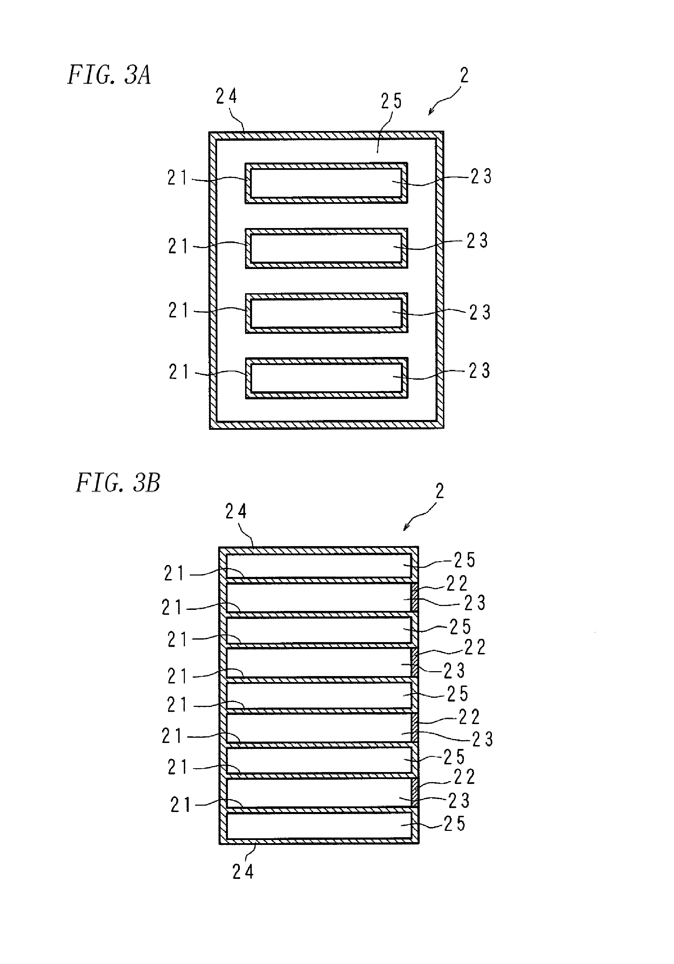

FIG. 3A and FIG. 3B are each a schematic sectional view of the container 2. FIG. 3A shows a sectional view thereof when the container 2 is viewed from the front side thereof, and FIG. 3B shows a sectional view thereof when the container 2 is viewed from a lateral position thereof. The container 2 is made into the form of a hollow rectangular parallelepiped, and the external shape of the container 2 is formed by an outer wall 24. Inside the container 2, plural inner walls 21 are present which are different from the outer wall 24 and are each in the form of a hollow rectangular parallelepiped having an opened front surface. In the front of each of the inner walls 21 in the hollow rectangular parallelepiped form, one of the lid sections 22 is positioned. As illustrated in FIG. 3A, each of the battery spaces 23 is surrounded by any one of the inner walls 21, so as to be formed. When the container 2 is viewed from the front side thereof, the outer wall 24 is separated from the inner walls 21, and the plural inner walls 21 are also separated from each other. The space between the outer wall 24 and the inner walls 21 separated therefrom, and respective spaces between the plural inner walls 21 separated from each other constitute a space 25 for the heating medium, which is a space in which the heating medium 3 flows. As illustrated in FIG. 3B, about each of the inner walls 21, its front region and its rear region are connected to the outer wall 24. Furthermore, in the container 2, plural openings are made for connecting the container 2 to the pipes 42, 43, 62 and 63, respectively, this situation being neither illustrated in FIG. 2, 3A nor 3B.

Each of the inner walls 21 connected to the outer wall 24 supports any one of the molten salt batteries 1 held in the respective battery spaces 23. The inner wall 21 is desirably made of a material high in thermoconductivity, such as aluminum, in order to make heat exchange easy between the molten salt battery 1 and the heating medium 3. Surfaces of the inner wall 21 that are positioned by the battery space 23, and the inside surface of each of the lid sections 22 are each made into an electrically insulating structure by a method of covering the surface with an insulating resin or some other method in order to prevent the molten salt batteries 1 from being short-circuited between each other. The outer wall 24 is desirably made into a heat insulating structure by a method of constituting the inside of the wall 24 by a heat insulating material or some other method in order that the temperature of the heating medium 3 can be kept.

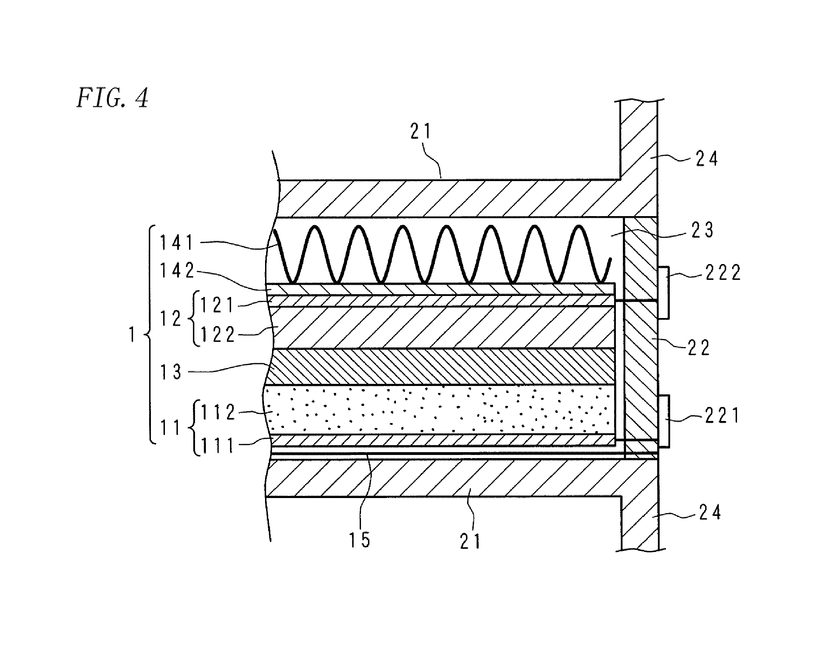

FIG. 4 is a schematic sectional view of a structural example of each of the molten salt batteries 1 held in the respective battery spaces 23. The molten salt battery 1 is composed of a positive electrode 11 and a negative electrode 12 that are each in the form of a flat rectangular plate, and a separator 13 that is made of glass cloth, resin or some other and is interposed therebetween. The battery 1 is held in any one of the battery spaces 23 to face the positive electrode 11 downward. Between the negative electrode 12 and the upper inner wall 21, a spring 141 made of a waved metal is arranged. The spring 141 biases an inflexible holding plate 142 that is made of an aluminum alloy and is in a flat plate form, thereby pressing the negative electrode 12 downward. The positive electrode 11 is pressed upward from the lower inner wall 21 by the reaction of the spring 14. The spring 141 is not limited to a spring made of any metal, or others, and may be, for example, an elastic body made of rubber or some other. When the positive electrode 11 or the negative electrode 12 is expanded or shrunken by charging and discharging, a change in the volume of the positive electrode 11 or the negative electrode 12 is absorbed by the expansion or shrinkage of the spring 141.

The positive electrode 11 is formed by painting a positive electrode material 112 containing NaCrO₂, which is a positive electrode active material, and a binder onto a current collector of positive electrode 111 that is made of aluminum and is in a rectangular plate form. The positive electrode active material is not limited to NaCrO₂. The negative electrode 12 is formed by plating the upper side of a negative electrode current collector 121 that is made of aluminum and is in a rectangular plate form with a negative electrode active material 122 containing tin, which is a negative electrode active material. The negative electrode active material is not limited to tin. For example, tin may be replaced with silicon or indium. When the upper side of the negative electrode current collector 121 is plated with the negative electrode active material 122, the workpiece is plated with zinc for zincate treatment to form an underlying layer, and then the underlying layer is plated with tin. The negative electrode 12 may be formed by incorporating a binder into, for example, a tin powder, and then painting the powder onto the upper side of the negative electrode current collector 121. The combination of the raw materials of the positive electrode material 112 and the negative electrode active material 122 is not limited to the above-mentioned combination, and may be any combination as far as the combination can realize the molten salt battery 1. The current collector of positive electrode 111 and the negative electrode current collector 121 are not limited to aluminum, and may be, for example, stainless steel. The separator 3 is impregnated with an electrolyte. In the present embodiment, as the electrolyte, a molten salt is used which is composed of an FSI (bis(fluorosulfonyl)imide) or TFSI (bis(trifluoromethylsulfonyl)imide) type anion, and cation(s) of sodium and/or potassium. The molten salt battery 1 may be in a form that some other molten salt is used as the electrolyte.

An end of the current collector of positive electrode 111 is connected to a positive electrode terminal 221 projected to the outside of the lid section 22 through a lead wire. An end of the negative electrode current collector 121 is connected to a negative electrode terminal 222 projected to the outside of the lid section 22 through a lead wire. The lead wires are each inserted into a hollow insulating member fitted into a non-illustrated fitting hole bored in the lid section 22, thereby being electrically insulated from the lid section 22. Furthermore, inside each of the battery spaces 23, a temperature sensor 15 is set for measuring the temperature of the molten salt battery 1. The temperature sensor 15 is made of, for example, a thermocouple. The temperature sensor 15 is connected to the temperature controlling section 52.

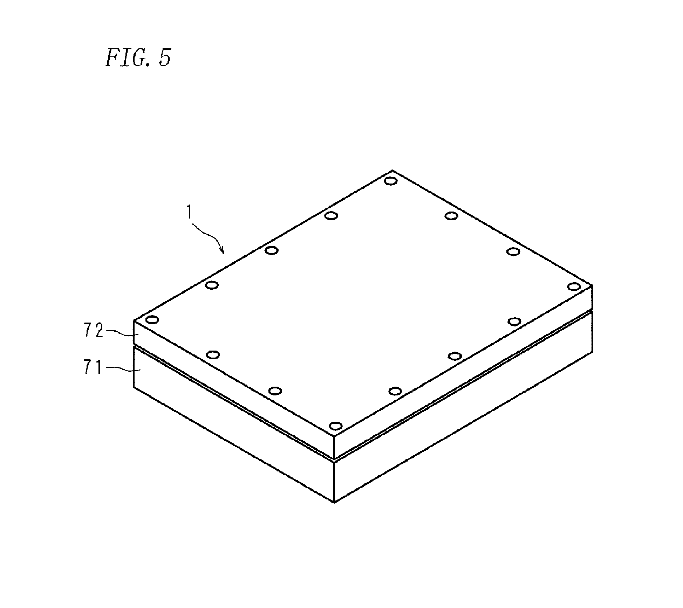

In FIG. 4 is shown an example wherein each of the molten salt batteries 1 is made of a single power generating element containing the positive electrode 11, the negative electrode 12 and the separator 13. However, the molten salt battery 1 may be structured to have plural power generating elements. FIG. 5 is a schematic perspective view illustrating a structural example of the molten salt battery 1 containing plural power generating elements. The molten salt battery 1 has a structure wherein a battery lid body 72 is fitted into a battery container 71 in which the plural power generating elements can be held.

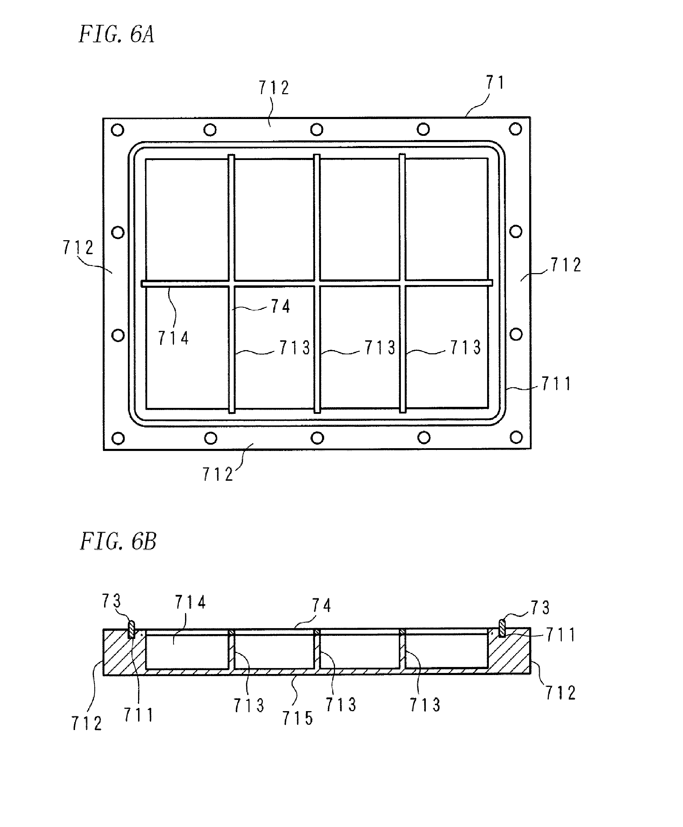

FIG. 6A and FIG. 6B are each a schematic view illustrating the structure of the battery container 71. FIG. 6A shows a schematic plan view of the battery container 71, and FIG. 6B shows a schematic sectional view of the battery container 71 as viewed from the front side thereof. The battery container 71 is made of aluminum, and is a container wherein side plate regions 712 are located to surround a bottom plate region 715 that is in a rectangular form in plan view. The battery lid body 72 is fitted through an O-ring 73 made of an insulating material into the respective top surfaces of the side plate regions 712, thereby producing the molten salt battery 1 made of a combination of the battery container 71 and the battery lid body 72. In the top surfaces of the side plate regions 712, a ring groove 711, into which the O-ring 73 is set, is made to be in a circular form.

In the bottom plate region 715 of the battery container 71, ribs 713, 713, and 713 are vertically formed from the side plate region 712 at the front side to the side plate region 712 at the rear side in such a manner that the bottom plate region 715 is divided at regular intervals into the transverse direction. In the bottom plate region 715, a rib 714 is vertically formed from the side plate region 712 at one of both the sides to the side plate region 712 at the other side in such a manner that the bottom plate region 715 is divided at regular intervals into the back and forth direction. On the upper surfaces of the ribs 713, 713, 713, and 714 is arranged an insulating member 74 equal in width to each of the ribs 713, 713, 713, and 714. The height obtained by adding the thickness of the insulating member 74 to the height of the ribs 713, 713, 713, and 714 is made substantially equal to the height of the side plate regions 712.

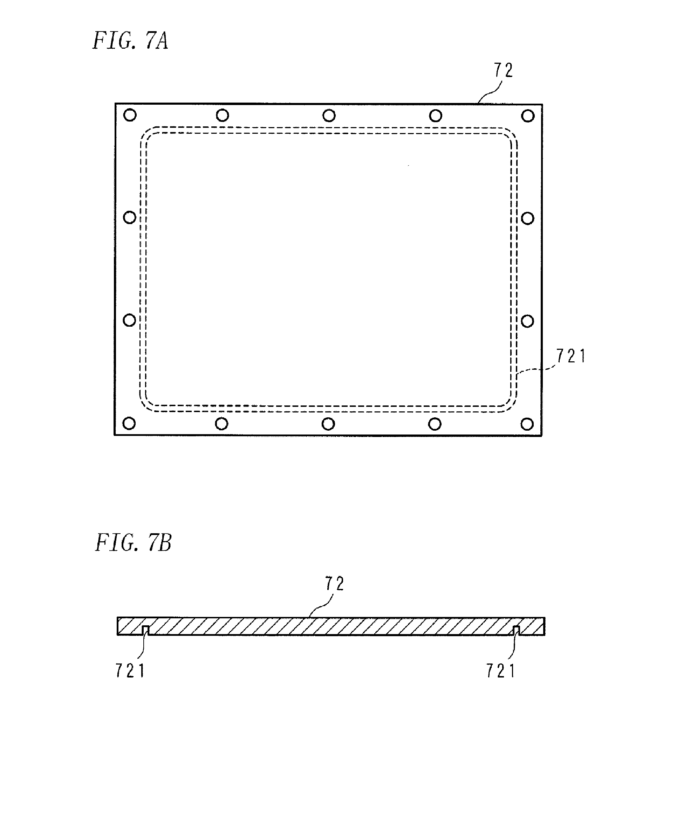

FIG. 7A and FIG. 7B are each a schematic view illustrating the structure of the battery lid body 72. FIG. 7A shows a schematic plan view of the battery lid body 72, and FIG. 7B shows a schematic sectional view thereof when the battery container 71 is viewed from the front side thereof. The battery lid body 72 is formed of aluminum into a rectangular plate form in plan view. In the bottom surface of the battery lid body 72, a ring groove 721 into which the O-ring 73 is set is made to be in a circular form.

When the battery lid body 72 is fitted to the battery container 71 in such a manner that the top surfaces of the side plate regions 712 of the battery container 71 are brought into close contact with the bottom surface of the battery lid body 72 to interpose the O-ring 73 therebetween, the inside of the battery container 71 is divided into eight blocks equal to each other in size. The battery container 71 and the battery lid body 72 are electrically insulated from each other through the O-ring 73 and the insulating member 74. Each of the blocks holds power generating elements as has been shown in FIG. 4, which are each composed of the positive electrode 11, the negative electrode 12 and the separator 13, and also holds the spring 141 and the holding plate 142 through which the power generating elements should be pressed from the above in such a manner that the positive electrode 11 faces downward. The spring 141 and the holding plate 142 are made of a conductive material. The positive electrodes 11 of the power generating elements held in each of the blocks are connected to each other through the battery container 71, and the negative electrodes 12 therein are connected to each other through the battery lid body 72.

Plural bolt holes are made in peripheral regions of the battery container 71 and the battery lid body 72. Into each of the blocks inside the battery container 71 are put the power generating elements, the springs 141 and the holding plates 142. Furthermore, the battery lid body 72 is fitted into the battery container 71 from the top surface thereof, and then the battery lid body 72 is fitted to the battery container 71 through bolts made of an insulating material, thereby fabricating a molten salt battery 1. The fabricated molten salt battery 1 is held in each of the battery spaces 23 inside the container 2, and the battery container 71 and the battery lid body 72 are connected to the positive electrode terminal 221, and the negative electrode terminal 222. In such a way, a molten salt battery device is formed which has the molten salt batteries 1 each containing the plural power generating elements. The above-mentioned structure of the molten salt batteries 1 is one example, and the structure of the molten salt batteries 1 may be a structure other than the structure illustrated in FIG. 4 to FIG. 7B.

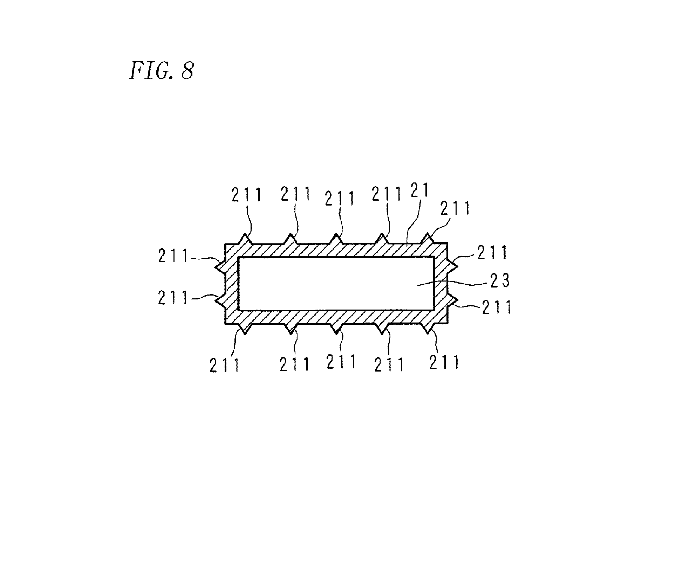

FIG. 8 is a schematic sectional view of any one of the inner walls 21 of the container 2. In FIG. 8 is shown a schematic sectional view of the inner wall 21 that surrounds one of the battery spaces 23 when the wall 21 is viewed from the front side thereof. In the inner wall 21 surface positioned by the heating medium space 25, plural projections 211 are formed. By the formation of the projections 211, the inner wall 21 surface positioned by the heating medium space 25 has a shape that convexes and concaves are repeatedly formed. By the formation of the projections 211 in the inner wall 21, the shape of the inside of the container 2 is a shape for generating a turbulent flow in the heating medium 3. The projections 211 hinder the heating medium 3 flowing around the inner wall 21 from flowing so that a turbulent flow is generated. When the turbulent flow is generated in the heating medium 3, the heating medium 3 is partially stirred so that a portion of the heating medium 3 that contacts the inner wall 21 is forcibly changed off with some other portion thereof. In this way, the portion of the heating medium 3 that contacts the inner wall 21 is rapidly changed off so that heat exchange made through the inner wall 21 between the molten salt battery 1 and the heating medium 3 becomes high in efficiency. For this reason, by reducing the distance between the inner wall 21 in which the projections 211 are formed, and the outer wall 24, and that between any two of the plural inner walls 21, the volume of the container 2 can be made small without lowering the efficiency of the heat exchange. About the molten salt battery device, wherein the volume of the container 2 is made small without lowering the efficiency of the heat exchange, the power of each of the molten salt batteries 1 is unchanged since the efficiency of the heat exchange is not lowered. Accordingly, without lowering the powers of the molten salt batteries 1, the amount of the heating medium 3 can be reduced and the molten salt battery device can be made small in size. Thus, the energy density of the molten salt battery device can be improved.

The form for generating a turbulent flow in the heating medium 3 is not limited to the form that the projections 211 are made, and may be any other form. In order to generate a turbulent flow in the heating medium 3, it is allowable to adopt, for example, a form that the surface of each of the inner walls 21 that is positioned by the heating medium space 25 is made into a waved form, or a form that a groove is made in the surface. Additionally, in order to generate a turbulent flow in the heating medium 3, it is also allowable to adopt, for example, a form that the inside of the container 2 is provided with a member set to link portions of the inner wall 21 to each other, or a member set to link the inner wall 21 to the outer wall 24.

As described in detail above, in the molten salt battery device of the invention, the molten salt batteries 1 are arranged inside the container 2 in such a manner that the heating medium spaces 25 are present around the molten salt batteries 1, and the heating medium 3 is filled into the heating medium spaces 25. Furthermore, while the temperature of the heating medium 3 is controlled by the temperature controlling section 52, the heating medium 3 is caused to flow. Between the flowing heating medium 3 and the molten salt batteries 1, heat exchange is attained, whereby the temperature of the molten salt batteries 1 is controlled in the molten salt battery device. The temperature controlling section 52 controls the temperature of the heating medium 3 in such a manner that the molten salt used as an electrolyte in each of the molten salt batteries 1 is actually molten into an electrolytic solution and further the positive electrode active material and the negative electrode active material in the molten salt battery 1 keep activity. In the present embodiment, the temperature controlling section 52 controls the temperature of the heating medium 3 into 70°C or higher, at which the molten salt composed of an FSI or TFSI type anion and one or more cations of sodium and/or potassium is molten. Moreover, it is desired to control the temperature into 200°C, which is the decomposition temperature of the molten salt, or lower. In an embodiment in which molten salt batteries 1 that operate at a higher temperature are used in a molten salt battery device, its temperature controlling section 52 controls the temperature of the heating medium 3 into a higher temperature. As the heating medium 3, a gas may be used. Water or an aqueous solution that is in a liquid state may be used. In the case of using, as the heating medium 3, an aqueous solution, the solute thereof is preferably a substance causing the boiling point of water to be raised, such as ethylene glycol. The solute is required to be a substance which does not erode the material of the inner walls 21 of the container 2. The heating medium 3 is preferably silicone oil or perfluoropolyether since the oil or compound is good in affinity with any member made of a metal, and high in stability against temperature.

In the invention, each of the molten salt batteries 1 is surrounded by the heating medium 3 flowing, and exchanges heat with the surrounding heating medium 3, so that the internal temperature is evenly controlled. Moreover, the molten salt batteries 1 exchange heat with the same heating medium 3; thus, in the plural molten salt batteries 1 also, the respective internal temperatures thereof are controlled into an even value. Since the internal temperature of each of the molten salt batteries 1 is evenly controlled, an internal portion of the molten salt battery 1 is not abnormally overheated, so that the molten salt battery 1 is high in safety. Additionally, it does not happen that an internal portion of the molten salt battery 1 becomes high in temperature so as to be deteriorated, so that the lifespan of the molten salt battery 1 is improved. Moreover, the internal temperature of the molten salt battery 1 can be evenly controlled into an appropriate temperature permitting the efficiency of the molten salt battery 1 to be optimal; thus, the efficiency of the molten salt battery 1 is improved. Furthermore, any one of the molten salt batteries 1 can operate at an appropriate even temperature; thus, deterioration of specified one of the molten salt batteries 1 does not advance so that the lifespan of the whole of the molten salt battery device is improved and further the efficiency of the whole of the molten salt battery device is improved.

In the molten salt battery device of the invention, the respective temperatures of the molten salt batteries 1 can be evenly raised in a short period by causing the heating medium 3 heated to flow. Accordingly, the starting period until the molten salt battery device can operate is shortened. Moreover, the device can be operated in the short starting period as the need arises; thus, when the operation is unnecessary, the molten salt battery device can be lowered in temperature, so as to be stopped. Therefore, the utilization efficiency of the molten salt battery device is improved. Furthermore, in the molten salt battery device of the invention, the temperature of the heating medium 3 is lowered, whereby the molten salt batteries 1 can easily be cooled. For example, in the molten salt battery device, the temperature of the molten salt batteries 1 may rise up to a temperature not lower than a predetermined range, as described above; in this case, the heating medium 3 heated is discharged from the container 2 and the heating medium 3 that is cooled to a lower temperature is injected into the container 2, whereby the molten salt batteries 1 can be rapidly cooled. In the molten salt battery device, therefore, the temperature of the molten salt batteries 1 does not continue to rise, so that the device is high in safety.

In the embodiment, the molten salt battery device has the plural molten salt batteries 1; however, the form of the device is not limited to this form. The molten salt battery device may have, in the container 2, a single molten salt battery 1. The structure of the container 2 described in the embodiment is one example; thus, the molten salt battery device may have a container 2 having a different shape. For example, the container 2 in the embodiment has a shape permitting heat exchange in four surfaces, i.e., the upper, lower, right and left surfaces, out of circumferential surfaces of each of the molten salt batteries 1; however, the shape of the container 2 may be a shape permitting heat exchange in all the circumferential surfaces of the molten salt battery 1, or a shape permitting heat exchange in three or less surfaces of the circumferential surfaces of the molten salt battery 1.

### (Embodiment 2)

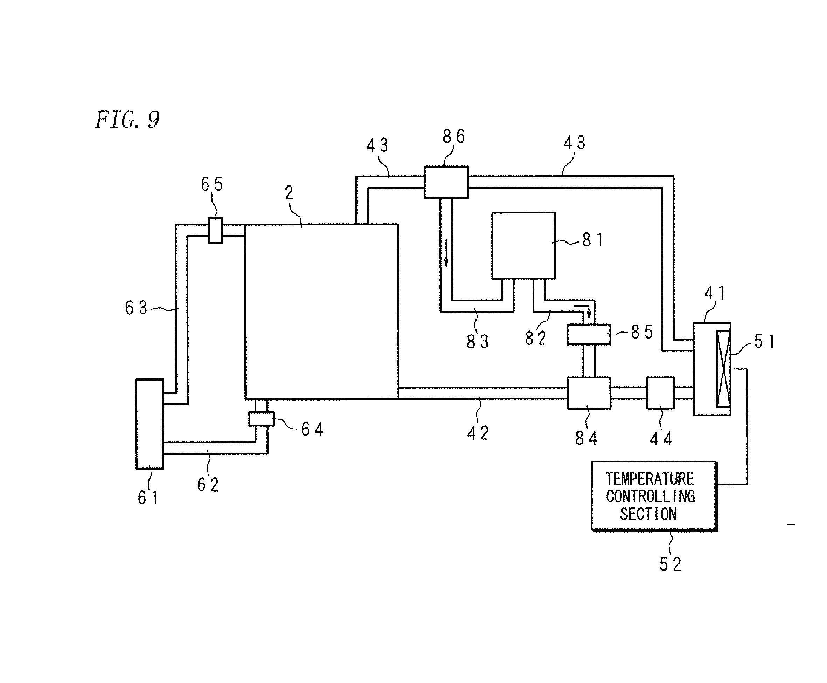

FIG. 9 is a schematic view illustrating the structure of a molten salt battery device according to embodiment 2. In the molten salt battery device according to embodiment 2, a three-way valve 84 is set in the middle of a pipe 42, and a bypass pipe 82 is linked to the three-way valve 84. In the middle of a pipe 43, a three-way valve 86 is set, and a bypass pipe 83 is linked to the three-way valve 86. In the middle of the bypass pipe 82, a pump 85 is placed. The three-way valve 86 switches the state that the bypass pipe 83 is disconnected from the pipe 43 and the state that the bypass pipe 83 is connected to the pipe 43 from each other. The three-way valve 84 switches the state that the bypass pipe 82 is disconnected from the pipe 42 and the state that the bypass pipe 82 is connected to the pipe 42 from each other. The bypass pipes 82 and 83 are linked to a vacuum insulating container (insulating container) 81. The vacuum insulating container 81 is a container which is thermally disconnected from the outside via a vacuum heat insulating layer. A temperature controlling section 52 can control operations of the three-way valves 84 and 86, and the pump 85. Other structures of the molten salt battery device are the same as in embodiment 1. The same reference numbers are attached to corresponding parts therebetween, respectively, and description thereof is omitted. In FIG. 9, the structure of the content of the container 2 is omitted.

In the state that the bypass pipe 83 is disconnected from the pipe 43 and the bypass pipe 82 is disconnected from the pipe 42, the molten salt battery device operates in the same manner as in embodiment 1. In the state that the bypass pipe 83 is connected to the pipe 42 by effect of the three-way valve 86, and the bypass pipe 82 is connected to the pipe 42 by effect of the three-way valve 84, the heating medium 3 is caused to flow from the pipe 43 through the three-way valve 86 to the bypass pipe 83 by action of the pump 85. The heating medium 3 passed through the bypass pipe 83 flows from the bypass pipe 83 to the vacuum insulating container 81. In the vacuum insulating container 81, the heating medium 3 is stored. The heating medium 3 stored in the vacuum insulating container 81 is thermally insulated from the outside, so as to be kept in temperature. By action of the pump 85, the heating medium 3 is caused to flow out from the vacuum insulating container 81 through the bypass pipe 82, and flow from the bypass pipe 82 through the three-way valve 84 into the pipe 42.

In an ordinary operation state, the heating medium 3 flows in the container 2 in the state that the bypass pipe 83 is disconnected from the pipe 43, and the bypass pipe 82 is disconnected from the pipe 42. At a specified timing, the temperature controlling section 52 commands the bypass pipe 83 to be connected to the pipe 43 by effect of the three-way valve 86, the bypass pipe 82 to be connected to the pipe 42 by effect of the three-way valve 84, and the pump 85 to be operated. At this time, the heating medium 3 in the vacuum insulating container 81 flows into the container 2, and further the heating medium 3 in the container 2 flows into the vacuum insulating container 81. In FIG. 9, arrows show the direction in which the heating medium 3 passes through the bypass pipes 82 and 83 to flow. The heating medium 3 in the vacuum insulating container 81 is changed off, so that the heating medium 3 having a temperature at which the molten salt batteries 1 operate is stored in the vacuum insulating container 81. At a timing when the heating medium 3 in the vacuum insulating container 81 is changed off, the temperature controlling section 52 commands the bypass pipe 83 to be disconnected from the pipe 43 by effect of the three-way valve 86, the bypass pipe 82 to be disconnected from the pipe 42 by effect of the three-way valve 84, and the pump 85 to be stopped. Thereafter, the molten salt battery device makes an ordinary operation. The above-mentioned processing, for storing the heating medium 3 into the vacuum insulating container 81, is conducted, for example, at a timing just before the molten salt battery device is stopped. It is allowable to conduct the processing for storing the heating medium 3 into the vacuum insulating container 81 periodically, for example, once per day.

In the state that the molten salt battery device does not operate, an electrothermal heater 51 is out of operation so that the heating medium 3 is not heated. Moreover, the pumps 44 and 85 are also out of operation so that the heating medium 3 does not flow. The temperature of the heating medium 3 in the container 2 remains low to be a temperature lower than the melting point of the molten salt used as an electrolyte in the molten salt batteries 1, for example, room temperature. The molten salt in the molten salt batteries 1 is solidified to have no electroconductivity. Thus, the molten salt batteries 1 are in an inoperable state. In this state also, the heating medium 3 kept warm is stored in the vacuum insulating container 81 so that the heating medium 3 in the vacuum insulating container 81 is kept at a sufficiently high temperature for melting the molten salt of the molten salt batteries 1.

Next, a description is made about a processing for starting up the molten salt battery device from a non-operating state to an operating state. In the non-operating state, the molten salt battery device receives a starting command by way of a method in which an operating section not illustrated is operated by a user, or some other method, and then the device makes the following starting processing: The temperature controlling section 52 commands the bypass pipe 83 to be initially connected to the pipe 43 by effect of the three-way valve 86, the bypass pipe 82 to be connected to the pipe 42 by effect of the three-way valve 84, and the pump 85 to be operated. The heating medium 3 kept warm in the vacuum insulating container 81 is passed from the vacuum insulating container 81 through the bypass pipe 83, the three-way valve 84, and the pipe 42 into the container 2. By the inflow of the heating medium 3 kept warm in the vacuum insulating container 81 into the container 2, the temperature of the heating medium 3 in the container 2 is raised. After a predetermined period elapses from the start of the inflow of the heating medium 3 kept warm, the temperature controlling section 52 commands the following to be attained: the bypass pipe 83 is disconnected from the pipe 43 by effect of the three-way valve 86; the bypass pipe 82 is disconnected from the pipe 42 by effect of the three-way valve 84; the pump 85 is stopped; the pump 44 is operated; and further the heating medium 3 is heated by the electrothermal heater 51. At a stage when the temperature of the heating medium 3 in the container 2 rises sufficiently, and the molten salt in the molten salt batteries 1 is molten, the molten salt batteries 1 turn into an operable state so that the starting of the molten salt battery device is completed. Thereafter, the molten salt battery device makes an ordinary operation for an electricity accumulating device. At a stage when the temperature of the heating medium 3 in the container 2 rises to a predetermined temperature, the temperature controlling section 52 may command the processing for disconnecting the bypass pipe 83 from the pipe 43 and disconnecting the bypass pipe 82 from the pipe 42.

As described in detail above, according to the embodiment, in the molten salt battery device, the vacuum insulating container 81 is located outside the container 2. In the molten salt battery device, the heating medium 3 is caused to flow from the container 2 into the vacuum insulating container 81 while the molten salt batteries 1 operate. In this way, the heating medium 3 is stored in the vacuum insulating container 81, whereby the temperature of the heating medium 3 is kept in the vacuum insulating container 81. When the molten salt battery device is started up, the heating medium 3, the temperature of which is kept in the vacuum insulating container 81, is caused to flow from the vacuum insulating container 81 to the container 2. Next, the heating medium 3 is heated by the electrothermal heater 51. The internal temperature of the container 2 is raised by the heating medium 3, the temperature of which is kept, and additionally the heating medium 3 is heated by the electrothermal heater 51. Therefore, the internal temperature of the container 2 can be raised up to a temperature at which the molten salt is actually molten in a shorter period than in a method of raising the temperature of the heating medium 3 by use of only the electrothermal heater 51. Thus, according to the embodiment, the starting period of the molten salt battery device can be shortened.

As the embodiment, an embodiment is described wherein the bypass pipe 83 linked to the pipe 43 and the bypass pipe 82 linked to the pipe 42 are used to circulate the heating medium 3 between the container 2 and the vacuum insulating container 81; however, the invention may be made into an embodiment having a different structure for circulating the heating medium 3. The molten salt battery device may be made into, for example, an embodiment wherein the container 2 and the vacuum insulating container 81 are connected to each other through an independent pipe which is neither linked to the pipe 43 nor the pipe 42.

### REFERENCE SIGNS LIST

- 1:: molten salt battery
- 11:: positive electrode
- 12:: negative electrode
- 13:: separator
- 15:: temperature sensor
- 2:: container
- 2:: inner wall
- 211:: projection
- 24:: outer wall
- 3:: heating medium
- 41, 61:: tank
- 42, 43, 62, 63:: pipe
- 44, 64, 85:: pump
- 51:: electrothermal heater
- 52:: temperature controlling section
- 53:: cooling section
- 81:: vacuum insulating container
- 82, 33:: bypass pipe
- 84, 86:: three-way valve

## Claims

1. A molten salt battery device including molten salt battery/batteries in each of which a molten salt being molten at a temperature higher than room temperature is used as an electrolyte, the device comprising:
a container in which the molten salt battery/batteries is/are arranged to cause a space to be present around a partial or entire periphery of the molten salt battery/batteries;
a heating medium filled in the space in the container;
means that causes the heating medium to flow; and
means that controls a temperature of the heating medium.

2. The molten salt battery device according to claim 1, further comprising:
means that detects the temperature of the molten salt battery/batteries,
means that discharges the heating medium from the container when the temperature detected by the means exceeds a predetermined temperature value, or when the temperature rises up to a value not lower than a predetermined range, and
means that injects into the container a heating medium having a temperature lower than that of the discharged heating medium.

3. The molten salt battery device according to claim 1 or 2, comprising, outside the container, an insulating container capable of storing, therein, the heating medium, and
further comprising means that circulates the heating medium between the container and the insulating container, and stops the circulation.

4. The molten salt battery device according to any one of claims 1 to 3, wherein the container is formed to have a shape for generating a turbulent flow in the heating medium around the periphery of the molten salt battery/batteries.

5. The molten salt battery device according to claim 4, wherein a projection for generating the turbulent flow in the heating medium around the periphery of the molten salt battery/batteries is formed in the container.

6. The molten salt battery device according to any one of claims 1 to 5, wherein the heating medium is water, an aqueous solution, silicone oil, or perfluoropolyether.

7. A method for controlling a temperature of a molten salt battery in which a molten salt being molten at a temperature higher than room temperature is used as an electrolyte, the method comprising:
arranging the molten salt battery in a container, and filling a heating medium into a space around the molten salt battery inside the container; and
causing the heating medium to flow with its temperature being controlled, and conducting heat exchange between the molten salt battery and the heating medium, thereby controlling a temperature of an inside of the molten salt battery.

8. The method according to claim 7, for controlling the temperature of the molten salt battery, wherein: outside the container is placed an insulating container capable of storing, therein, the heating medium, and circulating the heating medium between the insulating container and the container;
the heating medium is caused to flow from the container into the insulating container, and the heating medium caused to flow in is stored in the insulating container; and
in the state that the temperature of the heating medium in the container is lower than that of the heating medium inside the insulating container, the stored heating medium is caused to flow from the insulating container to the container, thereby raising the temperature of the heating medium inside the container.
